# EUROPEAN PATENT SPECIFICATION

(11) **EP 1 452 428 B1**
(45) Date of publication and mention of the grant of the patent: **06.08.2008**
(21) Application number: 02770231.5
(22) Date of filing: 02.10.2002
(51) Int. Cl.: B62D 55/15

(54) **CRAWLER TRAVELING DEVICE**
RAUPENFAHRVORRICHTUNG
DISPOSITIF ROULANT A CHENILLES

(30) Priority: 10.12.2001 JP 2001375972
(43) Date of publication of application: 01.09.2004
(73) Proprietor: Shin Caterpillar Mitsubishi Ltd., Tokyo 158-8530 (JP)
(72) Inventor: FUJITA, Kouhei Shin Caterpillar Mitsubishi Ltd., Setagaya-ku, Tokyo 158-8530 (JP); ADACHI, Shigeyoshi Shin Caterpillar MitsubishiLtd, Setagaya-ku, Tokyo 158-8530 (JP); OKAMOTO, Jyouji Shin Caterpillar Mitsubishi Ltd., Setagaya-ku, Tokyo 158-8530 (JP); SUEHIRO, Yuuichi Shin Caterpillar Mitsubishi Ltd., Setagaya-ku, Tokyo 158-8530 (JP)
(74) Representative: Reinhard - Skuhra - Weise & Partner
(86) International application number: PCT/JP2002/010306
(87) International publication number: WO 2003/049990

(56) References cited:
- JP-U- 53 074 832
- JP-U- 59 160 485
- US-A- 1 374 384
- US-A- 1 654 632
- US-A- 2 189 160
- US-A- 5 226 703
- US-A1- 2001 004 947

## Description

### Technical Field

The present invention relates to a crawler travelling apparatus that is used as a travelling apparatus for a hydraulic excavator and tractor.

### Background of the Invention

Generally, some work machines have a crawler travelling apparatus such as a hydraulic excavator and a tractor which employ as a travelling apparatus for an apparatus body to travel. Such a crawler travelling apparatus is provided with a drive sprocket (drive wheel) at one side in the forward and backward directions and an idler wheel (driven wheel) at the other side therein at both left and right sides of the travelling frame secured at the lower part of the body, a crawler belt is wound around both of these wheels, wherein a crawler belt moves endlessly between both the wheels in line with driving rotations of the drive sprocket, and the apparatus body travels forward and backward. In this case, with respect to the crawler belt wound around both the wheels, a plurality of lower rollers (grounding rollers, lower rolling rollers, and track rollers) are provided on the grounding side (lower portion), and upper rollers (upper rolling rollers and carrier rollers) are provided on the non-grounding surface side (upper portion). And, the rollers guide movement of the crawler belt.

Document US-A-1 374 384 relates to a truck or carriage for tractors of the type using endless articulated treads or track-chains. It discloses a tractor having an endless track-chain and a horizontal frame member provided with a vertical disposed guide-way; a carriage comprising a horizontal member disposes beneath and spaced from said frame member, a vertical member secured to said horizontal member and passing freely through said guide-way, a weight supporting roller carried by the lower portion of said vertical member and adapted to operate on the lower run of the track-chain to support the carriage and an idler roller carried by the upper portion of said vertical member.

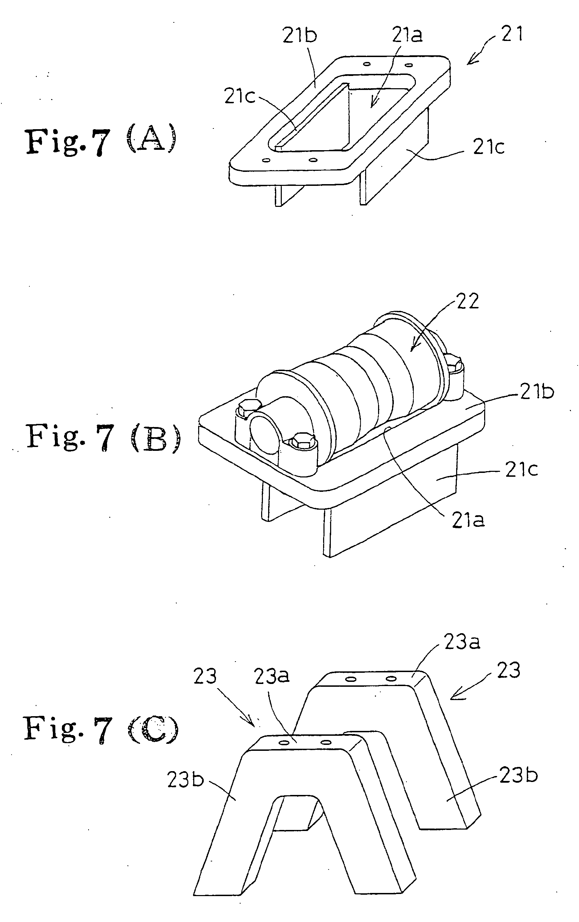

The above-described upper rollers are supported by a supporting receiving member integrally secured on the travelling frame. Here, for example, there is a type in which both-end portions of the roller shaft are supported by the supporting receiving member. Such types as shown in, for example, Figs. 7 (A) and (B) have been publicly known as such prior art structure. The support receiving member 21 is structured so that an opening 21a into which the upper roller 22 is loosely fitted is formed at the central portion of a rectangular flat-shaped member, and the member is provided with a roller supporting portion 21b constructed at the left and right side surfaces opposed to each other so as to support the roller shaft and a pair of forward and backward plate-shaped coupling pieces 21c for coupling the roller supporting portions 21b to the travelling body frame.

In the above-described prior art support receiving member 21, because the coupling piece 21c is formed to be like a long plate-shaped member in the roller shaft direction, that is, in the direction orthogonal to the travelling direction of the crawler belt, there are cases where mud and sand may enter between a pair of forward and backward coupling pieces 21c where the work machine travels on soft ground in a mountainous area. Once mud and sand enter, it is difficult that the mud and sand are discharged. In particular, in the winter season, the above-described mud and sand that has entered between the coupling pieces 21c are frozen, wherein such a problem occurs, by which smooth rotations of the upper rollers are hindered.

Therefore, it is proposed that as shown in Fig. 7(C), the support receiving member is formed as a segmented type, and both end portions of the roller shaft are, respectively, supported by a pair of supporting receiving members 23 so as not to accumulated mud and/or sand between the support receiving members 23. However, in this type, because a roller supporting portion 23a for supporting the roller shaft and coupling piece 23b for coupling the travelling body frame are integrally formed, it is difficult to fine-adjust the attaching position of the upper roller shaft by the support receiving members 23, wherein there is another problem by which the positional accuracy of the upper rollers cannot be secured. In any one of the above examples, there are shortcomings incidental to the types. Accordingly, the invention is meaningful in view of solving the above-described problems and shortcomings.

### DISCLOSURE OF THE INVENTION

The present invention was developed in view of the above-described situations, and it is therefore an object of the invention to solve the problems and shortcomings, wherein the invention provides a crawler travelling apparatus in which a pair of forward and backward wheels are rotatably disposed at both left and right sides of the travelling body frames secured at the lower part of a machine body and crawlers are wound around the wheels, wherein when both end portions of the roller shafts of the upper rollers for guiding and transferring the above-described crawlers are supported by the support receiving members secured on the travelling body frames, the above-described support receiving members are formed to be substantially reverse U-shaped by roller supporting portions having the above-roller shafts supported thereon and a pair of coupling pieces for coupling the corresponding roller supporting portions to the travelling body frames.

Thereby, no mud and sand are accumulated between the coupling pieces, and it is possible to adjust the position of the support receiving portion by adjusting the attaching state of the roller supporting portion and the coupling pieces.

In the above-described crawler travelling apparatus, the roller supporting portions of the respective supporting receiving members according to the invention can be integrated with the coupling pieces in a state where the positions thereof are adjusted in the forward/backward directions and vertical direction with respect to the coupling pieces.

### BRIEF DESCRIPTION OF THE DRAWINGS

Fig. 1 is an entire perspective view showing a hydraulic shovel;
Fig. 2 is a side elevational view of a travelling body frame;
Fig. 3 is a plan view of the travelling body frame;
Figs. 4(A), (B) and (C) are, respectively, a sectional view taken along the line X-X in Fig. 3, a plan view showing the major parts therein, and a view taken along the arrow Y-Y in Fig. 4(B);
Fig. 5 is a sectional view of the travelling body frame for describing the attaching state of upper rollers;
Figs. 6 (A) and (B) are, respectively, a disassembled perspective view of a support receiving member, and a perspective view for describing actions of the support receiving member; and
Figs. 7(A), (B) and (C) are, respectively, a perspective view showing a first prior art example, a perspective view showing the state of incorporating the upper roller in the first prior art example, and a perspective view showing a second prior art example.

### BEST MODE FOR CARRYING OUT THE INVENTION

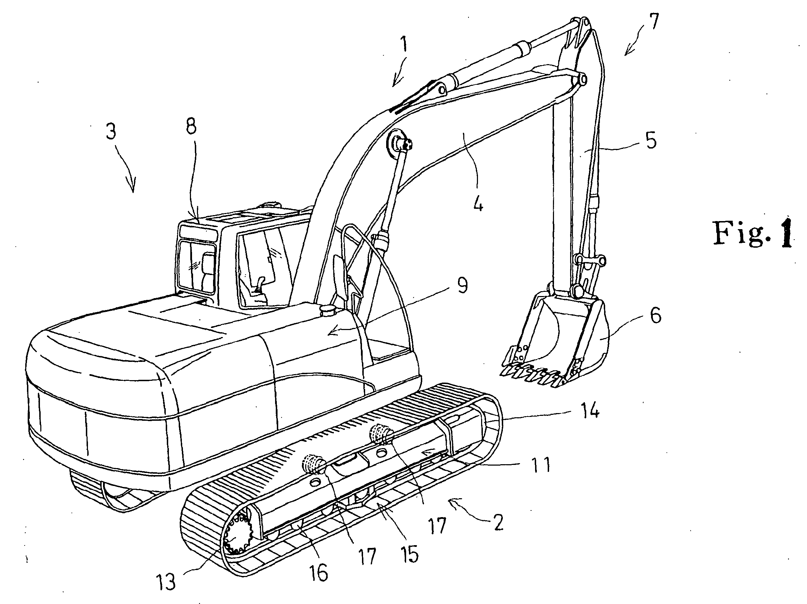

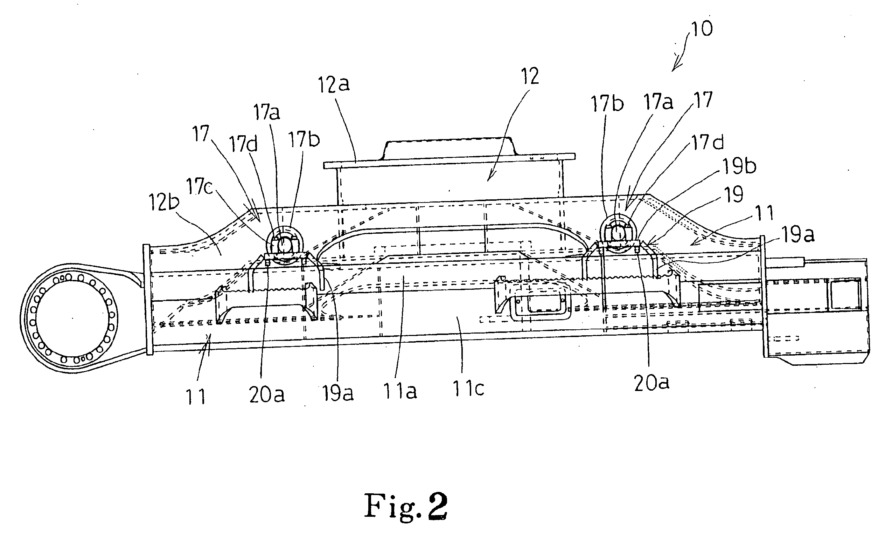

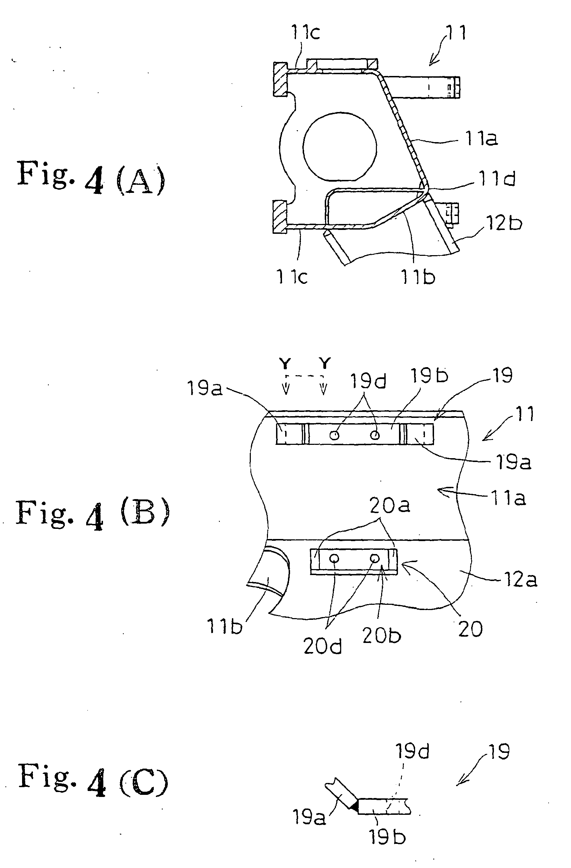

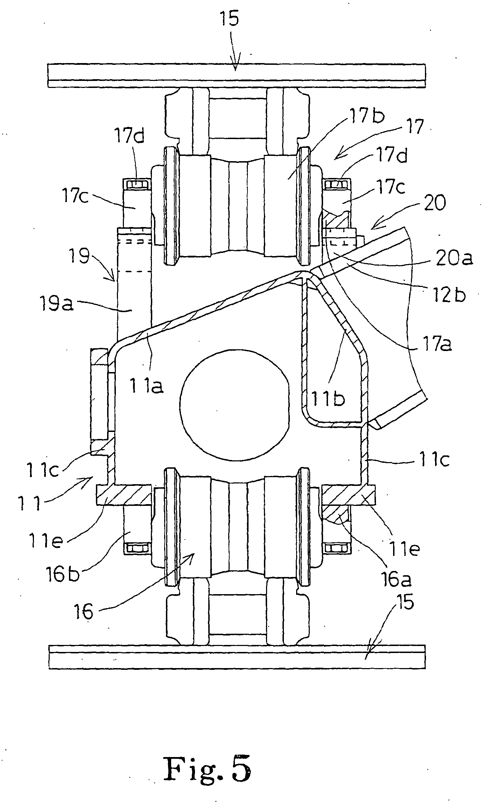

Next, a description is given of an embodiment of the invention on the basis of Fig. 1 through Fig. 6.

In the drawings, reference number 1 denotes a hydraulic shovel. The hydraulic shovel 1 is such that an upper structure 3 is supported so as to swivel above a lower structure 2 that is a crawler type travelling apparatus, and a front attachment 7 including member devices such as a boom 4, an arm 5, a bucket 6, etc., is mounted roughly at the central portion of the above-described upper structure 3. Further, a cabin 8 is provided at one side of the above-described front attachment 7, and a tank chamber 9 for a fuel tank and an operation oil tank, etc., is disposed at the other side thereof. That is, the basic structure is similar to that of a prior art apparatus.

Reference number 10 is a travelling body frame that constitutes the above-described lower structure 2. The travelling body frame 10 is formed so that track frames 11 positioned at both left and right sides and extending in the forward/backward directions are integrated with a cross frame 12, formed so as to integrate the track frames 11, from which a coupling portion 12a for coupling the upper structure 3 via a joint member (not illustrated) protrudes upward. And, drive sprockets 13 are rotatably supported at the rear end portions of the left and right track frames 11, respectively, and idle wheels 14 are rotatably supported at the front end portions thereof, respectively. An endless track belt (crawler) 15 is wound around both forward and backward wheels 13, 14. Thus, the crawler 15 is actuated in line with rotating drive of the above-described drive sprockets 13 in any one of normal and reverse directions. Based thereon, the machine body travels in the forward/backward direction of the apparatus body.

In order to secure smooth motions of the crawler 15, that is, to carry out smooth travelling of the machine body, plurality of lower rollers 16 are rotatably provided on the above-described respective track frames 11 juxtaposed in the forward and backward directions, which press the portion located at the grounding surface side of the crawler 15 wound around both the above-described wheels 13, 14 in the grounding direction, guide and move the crawler 15. In addition, upper rollers 17 are provided at two points in the forward and backward directions on the respective track frames 11, which press the non-grounding surface side (upper side) of the crawler 15 upwards, guide and transfer the crawler 15 while preventing the crawler 15 from becoming loose. The present invention is carried out in an attaching structure of these upper rollers 17. Also, in the embodiment, although the upper rollers 17 are provided at two points in the forward and backward directions of the rack frame 11, the upper roller may be provided at one point, or three points or at appropriately plural points depending on types of machines.

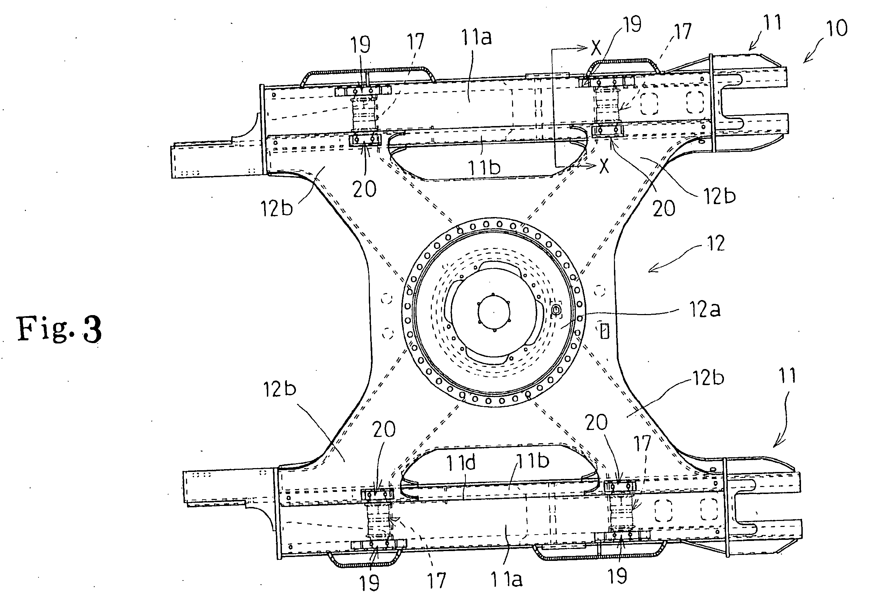

Here, the left and right track frames 11 are formed of a steel material so as to become ridge-like in its front view. The left and right track frames 11 are disposed to be linearly symmetrical. To simplify description, a description is given of only the track frame (right track frame) 11 positioned at the lower side in Fig. 3 while no description is given of the left track frame 11.

As described above, the track frame 11 is formed to be like a ridge, wherein it consists of a gently inclined first upper side 11a, positioned at the outer side of the machine body, whose inclination length is long with the height thereof gradually increased inward of the crawler, a keenly inclined second upper surface 11b, positioned at the inner side thereof, whose inclination length is short with the height gradually lower inward of the crawler, and both left and right side pieces 11c. And, the track frame 11 is ridge-like, in which the crossing point between the first upper surface 11a and the second upper surface 11b are made into a top portion 11d. Extension end portions of four extending members 12b radially extending from the connection portion 12a of the cross frame 12 are integrated at the forward and backward end portions of the top portion 11d. Also, the respective extending members 12b are formed so as to be inclined with the height thereof gradually increased toward the connection portion 12a side.

And, a pair of forward and backward upper rollers 17 are mounted above the track frame 11. The respective upper rollers 17 are provided with a roller shaft 17a and a roller portion 17b rotatably fitted over the roller shaft 17a. At the upper rollers 17, the roller shaft 17a is disposed in the direction orthogonal to the track frame 11 in order for the rotating direction of the roller portion 17b to be turned to the transferring direction (the forward and backward direction) of the crawler 15, whereby the respective roller shafts 17a are supported by the first upper surface 11a of the track frame and the first and second support receiving members 19, 20 which are, respectively, positioned and fixed on the extending member 12b (disposed above the second upper surface 11b) of the cross frame 12 opposed to the first upper surface 11a.

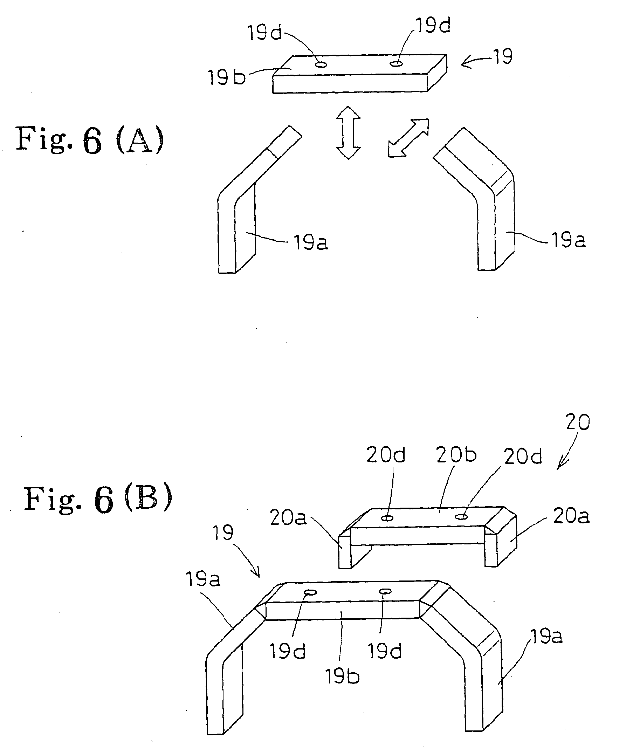

Here, a description is given of the above-described first and second support receiving members 19 and 20 on the basis of Fig. 6. First, the first support receiving member 19, secured on the first upper surface 11a of the track frame, which supports the outer end portion of the roller shaft 17a, is provided with a pair of forward and backward coupling pieces 19a which are long in the vertical direction and the upper end portion of which is folded over in the direction opposed to each other, and a roller supporting portion 19b fixed between the upper end portions of the coupling pieces 19a, and further the first support receiving member 19 is structured to be C-shaped in its side elevational view, wherein the lower end portion of the coupling pieces 19a is fixed to the first upper side 11a by means of welding, etc. And, a pair of forward and backward threaded holes 19d are formed on the upper surface of the roller supporting portion 19b, which fixes the outer end portion of the roller shaft 17a by a screw 17d.

On the other hand, the second supporting receiving member 20 which is provided on the cross frame extending portion 12b located at a higher position than the first upper surface and supports the inner end portion of the roller shaft 17a is structured to be lower than the first supporting receiving member 19. Furthermore the second supporting receiving member 20 is provided with a pair of forward and backward coupling pieces 20a oriented in the perpendicular direction and a roller supporting portion 20b fixed between the upper end portions of the coupling pieces 20a and is structured to be roughly C-shaped in its side elevational view. In addition, the lower end portion of the coupling pieces 20a is fixed by means of welding, etc., on the extending portion 12b. And, a pair of forward and backward threaded holes 20d which are to fix the outer end portion of the roller shaft 17a by using a screw 17d are provided on the upper surface of the roller supporting portion 20b of the second support receiving member. And, by fixing both end portions of the roller shaft 17a of the upper roller 17 on the first and second support receiving members 19, 20 via the axial support member 17c, respectively, the respective upper rollers 17 are structured so that it is supported by being held at both sides thereof by four coupling pieces 19a, 20a located at the forward and backward sides and the right and left sides thereof.

In addition, in a state where the upper rollers 17 are mounted, the upper side tangential position of the upper rollers 17 are established so as to become higher than the upper tangential position of both forward and backward wheels 13 and 14, wherein the locus of the upper portion of the crawler 15 is set so as to be raised to an upper level. Thereby, the construction is suitable for a case where the crawler 15 runs even on soft ground.

In addition, in the construction, the first and second support receiving members 19, 20 are mounted on the travelling body frame 10 in a state where the positions in the respective vertical directions and positions in the respective lateral directions are adjusted, thereby it is possible to adjust the mounted states of the respective upper rollers 17.

That is, the respective support receiving members 19 and 20 are structured so as to be integrated by attaching and fixing the roller supporting portions 19b, 20b between the upper end portions of a pair of coupling pieces 19a, 20a by means of welding, and, with.respect to the fixing positions of the roller supporting portions 19a, 20a for the coupling pieces 19b and 20b, that is, the fixing positions of the roller supporting portions 19a, 20a on the upper end portion end surface of the coupling pieces 19b, 20b, as shown in Fig. 6(A), it is possible to shift the fixing positions in the plate thickness direction in the vertical directions and in the plate width direction in the lateral directions. That is, by welding and attaching the roller supporting portions 19b, 20b with their positions shifted, the positions thereof can be adjusted. Thereby, it is possible to absorb the dimensional errors due to assembling at the attaching position of the upper rollers 17 by adjusting the support receiving members 19, 20.

Also, the lower roller 16 is structured as in the above-described upper roller 17. Both end portions of the roller shaft 16a are supported at the lower end portion of the shoulder portion 11c at both sides of the track frame. That is, a wide mounting shoulder portion 11e is integrated at both lateral directions of the lower end portion of the shoulder portion 11c at both sides of the track frame. Here, the axial supporting member 16b in which the roller shaft end portion of the lower roller 16 is internally supported is set so as to be screwed and fixed in the attaching shoulder portion 11e in a state where prescribed clearance is provided in the forward and backward directions.

In the embodiment of the invention, which is constructed as described above,'the hydraulic shovel 1 travels on the basis of endless transfer of the crawler 15 suspended at and attached to the left and right track frames 11 that constitute the travelling body frame 10. In this case, the upper rollers 17 for guiding and transferring the crawlers 15 are axially supported via the first and second supporting receiving members 19 and 20 at which both left and right end portions of the roller shaft 17a are attached to and fixed at the travelling body frame 10 (the first upper surface 11a of the track frame and the cross frame extension piece 12b) in a state where both sides of the upper rollers 17 are held at both sides thereof. Therefore, the upper rollers 17 can be constructed to be tough in structure. Further, in the structure, because both end portions of the roller shafts 17a are individually supported by the left and right support receiving members 19, 20 it is possible to prevent mud and sand from entering between the left and right support receiving members 19, 20. Therefore unlike the prior art case in which the left and right support receiving members are integrated, it can surely avoids troubles that rotations of the roller shafts are hindered because mud and sand enter between the forward and backward coupling pieces and are not discharged therefrom.

Further, because the embodiment is constructed so that the first and second support receiving members 19, 20 which support one end portion of the roller shaft 17a are segmented into a pair of forward and backward coupling pieces 19a, 20a and roller supporting portions 19b, 20b attached and fixed between the upper end portions of the coupling pieces 19a and 20a, when attaching and fixing the roller supporting portions 19b, 20b to and at the coupling pieces 19a, 20a, it is possible to adjust the attaching positions of the upper rollers 17 with respect to the track frame 11 by attaching and fixing the roller supporting portions 19b, 20b to and at the coupling pieces 19a with the positions thereof adjusted in the vertical direction and lateral direction. As a result, for example, even in a case where there exists an error in the assembling of the travelling body frame 10, the positional accuracy of the upper rollers 17 can be improved by carrying out the above-described adjustment in the assembling (attaching and fixing) process of the respective support receiving members 19, 20.

### INDUSTRIAL APPLICABILITY

The present invention can be widely applicable in a case where a support receiving member for supporting the upper roller is provided. However, it is further effective in a case where mud and sand are prevented from being accumulated in the surroundings of the support receiving portion and the positional accuracy of the upper roller can be improved.

## Claims

1. A crawler travelling apparatus (2) comprising each pair of forward and backward wheels (13, 14) rotatably disposed at both left and right sides of travelling body frames (10) secured at the lower part of a machine body (1) and crawlers wound around said wheels (13, 14), wherein when left and right end portions of roller shafts (17a) of the upper rollers (17) for guiding and transferring said crawlers are supported by support receiving members (19, 20) secured on said travelling body frames (10), said support receiving members (19, 20) are formed to be one pair respectively supporting the left and right end portion of the roller shaft (17a), the crawler travelling apparatus
**characterized in that**
said each support receiving member (19, 20) is substantially reverse U-shaped in the side elevational view and being segmented into a roller supporting portion (19b, 20b) where the roller shaft (17a) is supported and a pair of backward and forward coupling pieces (19a, 20a) which are secured on said travelling body frames (10) at the lower ends, and
said each support receiving member (19, 20) is formed by integrating the roller supporting portion (19b, 20b) with the coupling pieces (19a, 20a) in a state where the backward and forward ends of the roller supporting portion (19b, 20b) is positionally adjusted in the backward and forward directions and vertical directions between the upper end portions of the backward and forward coupling pieces (19a, 20a).

## Patentansprüche

1. Raupenfahrvorrichtung (2) mit jeweils einem Paar von vorderen und hinteren Rädern (13, 14), welche auf beiden Seiten links und rechts der Fahrwerkskörper (10), die an dem unteren Teil eines Maschinenkörpers (1) befestigt sind, drehbar angebracht sind, und mit Raupenketten, die um die Räder (13, 14) gewunden sind, wobei falls linke und rechte Endabschnitte der Rollenwellen (17a) der oberen Rolle (17) zum Führen und Fördern der Raupenketten von Abstützaufnahmebauteilen (19, 20), die an den Fahrwerkskörpern (10) befestigt sind, abgestützt sind, die Abstützaufnahmebauteile (19, 20) als ein Paar ausgebildet sind, welche den linken bzw. den rechten Endabschnitt der Rollenwelle (17a) abstützen, wobei die Raupenfahrvorrichtung
**dadurch gekennzeichnet ist,**
**dass** jedes Abstützaufnahmebauteil (19, 20) in der Seitenansicht im Wesentlichen umgedreht U-förmig ausgebildet ist und in einen Rollenabstützabschnitt (19b, 20b), bei dem die Rollenwelle abgestützt ist, und ein Paar von vorderen und hinteren Koppelstücken (19a, 20a), die an den unteren Enden am Fahrwerkskörper (10) befestigt sind, unterteilt ist, und
**dass** jedes Abstützaufnahmebauteil (19, 20) durch Integration des Rollenabstützabschnitts (19b, 20b) mit den Koppelstücken (19a, 20a) in einem Zustand ausgebildet ist, bei dem die hinteren und vorderen Enden des Rollenabstützabschnitts (19b, 20b) bezüglich ihrer Lage in der Vorwärts- und Rückwärtsrichtung und in vertikalen Richtungen zwischen den oberen Endabschnitten der hinteren und vorderen Kupplungsstücke (19a, 20a) eingepasst sind.

## Revendications

1. Dispositif roulant à chenilles (2) comprenant un couple de roues avant et arrière (13, 14) disposées en rotation au niveau des côtés tant gauche que droit de châssis de caisse roulants (10) fixés au niveau de la partie inférieure d'une caisse de machine (1) et des chenilles enroulées autour desdites roues (13, 14), dans lequel lorsque des parties d'extrémité de gauche et de droite d'arbres de rouleau (17a) des rouleaux supérieurs (17) pour guider et transférer lesdites chenilles sont supportées par des éléments de réception de support (19, 20) fixés sur lesdits châssis de caisse roulants (10), lesdits éléments de réception de support (19, 20) sont formés pour être un couple unique supportant respectivement la partie d'extrémité gauche et droite de l'arbre de rouleau (17a), le dispositif roulant à chenilles étant **caractérisé en ce que :**
chaque dit élément de réception de support (19, 20) a sensiblement une forme de U inversé dans la vue de profil en élévation et est segmenté en une partie de support de rouleau (19b, 20b) où l'arbre de rouleau (17a) est supporté et un couple de pièces d'accouplement arrière et avant (19a, 20a) qui sont fixées sur lesdits châssis de caisse roulants (10) au niveau des extrémités inférieures, et
chaque dit élément de réception de support (19, 20) est formé en intégrant la partie de support de rouleau (19b, 20b) avec les pièces d'accouplement (19a, 20a) dans un état où les extrémités arrière et avant de la partie de support de rouleau (19b, 20b) ont leur position ajustée dans les sens arrière et avant et dans la direction verticale entre les parties d'extrémité supérieures des pièces d'accouplement arrière et avant (19a, 20a).
